# NOUVEAU FASCICULE DE BREVET EUROPEEN

(11) **EP 0 536 058 B2**
(45) Date de publication et mention de la décision concernant l'opposition: **27.01.1999**
(45) Mention de la délivrance du brevet: 15.11.1995
(21) Numéro de dépôt: 92420303.7
(22) Date de dépôt: 10.09.1992
(51) Int. Cl.: H02H 3/04, H02H 1/06

(54) **Déclencheur électronique comportant des moyens de signalisation locale du type de défaut détecté**
Elektronischer Auslöser mit lokale den detektierten Fehler anzeigende Mittel
Electronic trip device comprising local detected fault type indicating means

(30) Priorité: 02.10.1991 FR 9112214
(43) Date de publication de la demande: 07.04.1993
(73) Titulaire: SCHNEIDER ELECTRIC SA, 92100 Boulogne Billancourt (FR)
(72) Inventeur: Villard, Dominique, F-38050 Grenoble Cédex 9 (FR); Piney, Philippe, F-38050 Grenoble Cédex 9 (FR)
(74) Mandataire: Jouvray, Marie-Andrée

(56) Documents cités:
- EP-A- 226 530
- WO-A-91/03826
- DE-A- 2 730 906
- US-A- 3 871 170

## Description

L'invention concerne un déclencheur électronique selon le préambule de la revendication 1.

Un déclencheur de ce type est décrit dans WO-A-91/03826. Dans le déclencheur connu l'alimentation auxiliaire est disposée en parallèle sur l'alimentation à propre courant du déclencheur. Après ouverture du disjoncteur l'alimentation à propre courant disparaît et les moyens de signalisation locale ne sont plus alimentés que par l'alimentation auxiliaire. Des moyens sont prévus pour tester la charge de la pile ou de la batterie constituant l'alimentation auxiliaire dont la durée de vie est limitée, ce qui oblige à des vérifications régulières.

L'invention a pour but de remédier à ces inconvénients. Ceci est obtenu essentiellement par des mesures d'économie de l'alimentation auxiliaire.

Selon l'invention, ce but est atteint par un déclencheur selon la revendication 1.

L'affichage n'est donc activé que pendant des périodes relativement courtes, par exemple de l'ordre de 1'30, mais suffisantes pour un opérateur. Le signal de commande d'affichage est constitué par le signal de déclenchement ou produit par les moyens de commande manuelle d'affichage, par exemple un bouton-poussoir.

Selon un développement de l'invention, les moyens de signalisation locale comportent des seconds moyens interrupteurs connectés entre les moyens d'alimentation auxiliaire et les bornes d'alimentation des moyens de signalisation, le circuit de commande de signalisation produisant un signal de fermeture des seconds moyens interrupteurs pendant une seconde période prédéterminée, supérieur à la première, après réception par le circuit de commande de signalisation d'un signal de déclenchement. L'alimentation des moyens de signalisation locale est alors également limitée, par exemple à une période de l'ordre de 24h après émission d'un signal de déclenchement, économisant ainsi la pile.

Dans un mode particulier de réalisation, le circuit de commande de signalisation comporte une horloge, recevant sur une entrée le signal de commande d'affichage, un bistable comportant deux entrées dont l'une est connectée à l'entrée de l'horloge et dont l'autre est connectée à une sortie de l'horloge produisant le signal de fermeture contrôlant la fermeture des premiers moyens interrupteurs, un transistor de sortie du bistable constituant les premiers moyens interrupteurs.

D'autres avantages et caractéristiques ressortiront plus clairement de la description qui va suivre de modes particuliers de réalisation de l'invention, donnés à titre d'exemples non limitatifs et représentés aux dessins annexés sur lesquels :

La figure 1 illustre, sous forme schématique, un dédencheur selon l'invention.

La figure 2 représente un mode de réalisation particulier du circuit de commande de signalisation du dédencheur selon la figure 1.

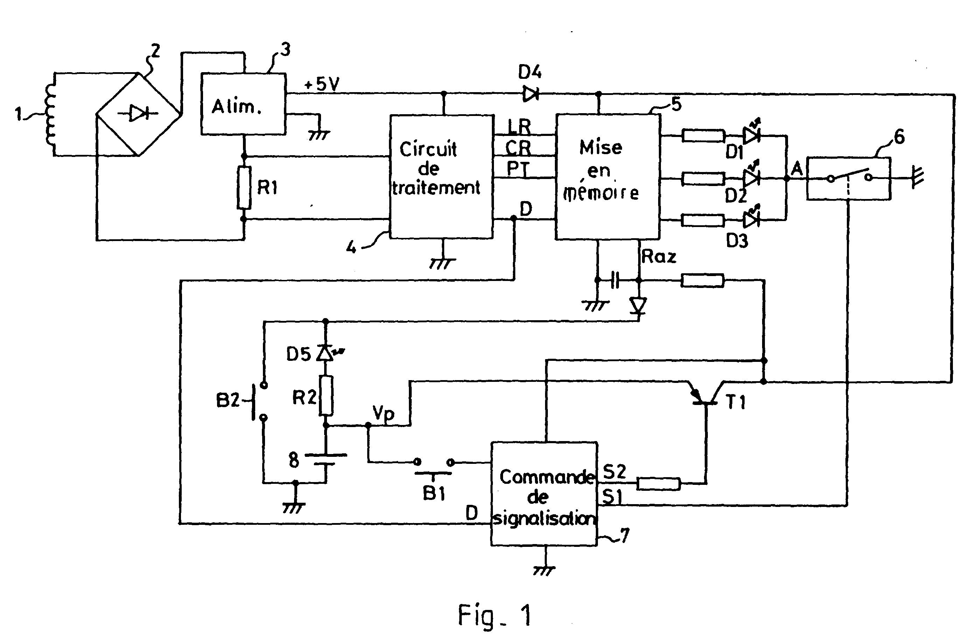

Le déclencheur selon la figure 1 comporte des moyens de mesure du courant parcourant une ligne électrique (non représentée) à protéger. Ces moyens sont par exemple constitués par un transformateur de courant 1. La sortie du transformateur de courant 1 est connectée à un circuit redresseur 2, par exemple un redresseur en pont. La sortie du circuit redresseur est connectée à une résistance de mesure R1 disposée en série avec un circuit d'alimentation 3. Un circuit de traitement 4, analogique, numérique ou à microprocesseur, est connecté aux bornes de la résistances de mesure R1 et alimenté par une tension d'alimentation, par exemple 5V, fournie par le circuit d'alimentation 3. Le circuit de traitement 4 fournit un signal de dédenchement D lorsqu'un défaut ou une surcharge apparait dans la ligne électrique à surveiller.

Un déclencheur à propre courant de ce type est bien connu des spécialistes. Bien entendu un tel dédéclencheur peut être aussi bien être polyphasé que monophasé.

Dans les déclencheurs connus, le circuit de traitement fournit également des signaux représentatifs du type de défaut détecté. Sur la figure 1, on a représenté trois sorties. Chaque sortie est associée à un type de défaut, un signal sur l'une des sorties signifiant que le dédencheur a détecté le défaut correspondant. A titre d'exemple, le dédencheur selon la figure 1 peut fournir un signal de défaut long retard LR, un signal de défaut court retard CR et un signal de défaut protection terre PT. Ces signaux sont appliqués à un circuit de signalisation du type de défaut. Sur la figure 1, celui-ci comporte une diode électroluminescente D1,D2 et D3, associée à chaque type de défaut. Les anodes des diodes D1,D2 et D3 sont connectées, par l'intermédiaire de résistances, à des sorties associées d'un circuit 5 de mise en mémoire dont les entrées sont connectées aux sorties du circuit de traitement. Les cathodes des diodes D1,D2 et D3, sont connectés à un point A commun. Le point A est connecté à la masse par l'intermédiaire d'un interrupteur 6 normalement ouvert.

En fonctionnement normal, en l'absence de défaut sur la ligne à surveiller, le circuit d'alimentation 3 alimente le circuit de traitement 4 et, par l'intermédiaire d'une diode D4, le circuit de signalisation. Le circuit de mise en mémoire 5 ayant préalablement été remis à zéro, ses sorties sont au niveau logique 0 et les diodes électroluminescentes D1,D2 et D3, sont éteintes.

Lorsqu'un défaut est détecté par le circuit de traitement, celui-ci fournit un signal de dédenchement D, qui actionne un disjoncteur (non représenté) pour interrompre la circulation du courant dans la ligne à protéger. Le signal de déclenchement D est également appliqué au circuit de mise en mémoire 5 pour contrôler la mise en mémoire dans celui-ci des signaux représentatifs du type de défaut, fournis également par le circuit de traitement.

Le signal de déclenchement D est également appliqué à l'entrée d'un circuit de commande de signalisation 7. Lorsqu'il reçoit le signal de déclenchement D, le circuit 7 fournit pendant une première durée prédéterminée t1, par exemple de l'ordre de 1'30, un signal S1 de commande de fermeture de l'interrupteur 6. L'interrupteur 6 étant fermé, la diode électroluminescente D1,D2 ou D3, correspondant au type de défaut détecté et mis en mémoire dans le circuit 5, s'allume pendant cette durée, puis s'éteint.

L'alimentation à propre courant fournie par le circuit d'alimentation 3 disparait après ouverture du disjoncteur. Une alimentation auxiliaire, par exemple une pile 8, est prévue pour alimenter le circuit de signalisation après dédenchement. Les bornes d'alimentation du circuit de signalisation (circuit de mise en mémoire 5 et circuit de commande de signalisation 7) sont connectées, d'une part, à la cathode de la diode D4 et, d'autre part, à la pile 8 par l'intermédiaire d'un transistor T1 constituant un interrupteur statique. Sur la figure 1, le transistor T1, de type pnp, a son émetteur connecté à la borne positive de la pile 8 et son collecteur connecté aux bornes d'alimentation positives des circuits 5 et 7. La base du transistor T1 est connectée, par l'intermédiaire d'une résistance, à une seconde sortie du circuit 7. Le circuit de commande 7 fournit sur cette seconde sortie un signal S2 de fermeture (conduction) du transistor T1 pendant une seconde durée prédéterminée t2, par exemple de l'ordre de 24h, après réception du signal de dédenchement D.

Ainsi, lors de l'émission d'un signal de dédenchement D par le circuit de traitement 4, les informations représentatives du type de défaut (LR,CR,PT) sont mises en mémoire dans le circuit 5 et le circuit 7 commande (S1,S2) la fermeture des interrupteurs 6 et T1, respectivement pendant des durées t1 et t2, t2 étant très supérieure à t1. La conduction du transistor T1 met en parallèle la tension Vp de la pile et la tension (5V) du circuit d'alimentation 3. La diode D4 et le transistor T1 forment un circuit OU et la tension la plus élevée est appliquée aux bornes d'alimentation du circuit de signalisation. La tension Vp de la pile est choisie de manière à être inférieure à la tension (5V) fournie par le circuit d'alimentation. Dans un mode de réalisation préférentiel, Vp = 3,5V. De cette manière, la pile n'est utilisée que lorsque l'alimentation à propre courant disparait après ouverture du disjoncteur. La fermeture de l'interrupteur 6 pendant une durée relativement courte, t1 =1'30 par exemple, limite ensuite la consommation des diodes électroluminescentes. Une commande manuelle de réactivation, par exemple un bouton-poussoir B1, connecte la pile à une entrée du circuit de commande 7. La fermeture de ce bouton-poussoir B1 provoque la production d'un signal S1 pendant la durée t1 et, en conséquence, la fermeture de l'interrupteur 6 et l'actionnement de la diode électroluminescente (D1,D2 ou D3) correspondant au type de défaut détecté. Cette réactivation, sur demande, pendant une durée limitée, du circuit de signalisation permet à un opérateur de vérifier le type de défaut avant de réenclencher le disjoncteur après réparation, tout en économisant au maximum la pile.

L'ouverture du transistor T1 après une période t2 suivant l'émission de l'ordre de déclenchement D, coupant l'alimentation du circuit de signalisation, limite la période pendant laquelle la signalisation reste disponible de manière à économiser encore la pile.

Un second bouton-poussoir B2 est disposé entre la masse et une entrée de remise à zéro (RAZ) du circuit de mise en mémoire 5. Ce bouton-poussoir est actionné par l'opérateur avant réendenchement du disjoncteur. Simultanément, ce bouton-poussoir permet de tester la charge de la pile 8. Dans ce but, le bouton-poussoir B2 est disposé en parallèle sur un circuit série constitué par la pile 8, une résistance de limitation R2 et une diode électroluminescente D5.

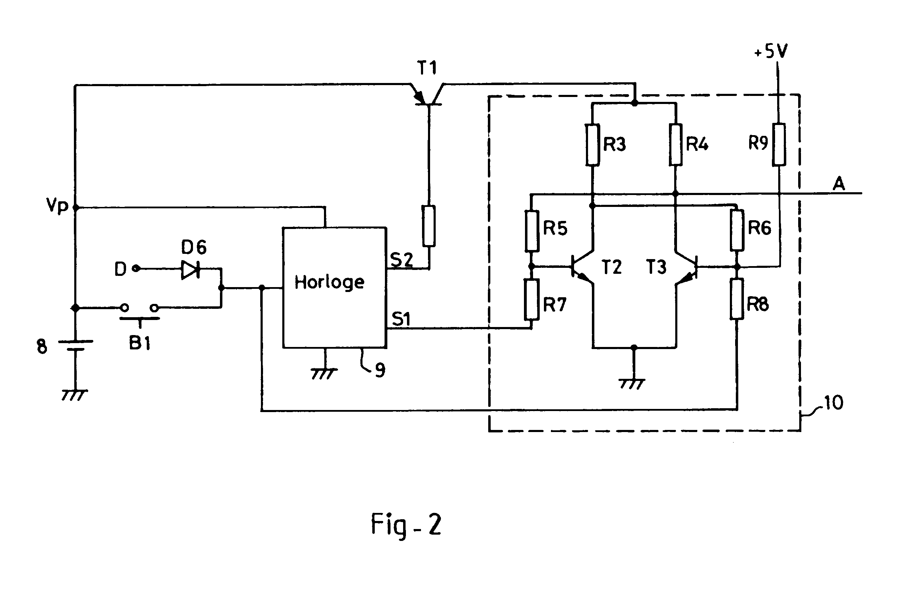

Dans le mode de réalisation particulier représenté à la figure 2, le circuit de commande de signalisation 7 comporte une horloge 9 connectée à un circuit bistable 10. L'horloge 9 comporte une entrée de remise à zéro connectée à la borne positive de la pile 8 par l'intermédiaire du bouton-poussoir de réactivation B1, et à la sortie du circuit de traitement 4 fournissant le signal de dédenchement D par l'intermédiaire d'une diode D6. L'application d'un signal sur cette entrée fait démarrer un premier cyde d'horloge produisant le signal S1 pendant la durée t1 et un second cyde d'horloge produisant le signal S2 pendant la durée t2. L'entrée de l'horloge 9 est connectée à une première entrée du bistable 10, tandis que le signal de sortie S1 de l'horloge est appliqué sur une seconde entrée du bistable 10. De manière classique, le bistable 10 de la figure 2 comporte deux transistors T2 et T3 dont les émetteurs sont connectés à la masse et dont les collecteurs sont connectés à la borne d'alimentation, c'est à dire au collecteur du transistor T1, par l'intermédiaire de résistances R3 et R4. Le collecteur du transistor T3 est connecté à la base du transistor T2 par l'intermédiaire d'une résistance R5, tandis que le collecteur du transistor T2 est connecté à la base du transistor T3 par une résistance R6. Le signal S1 est appliqué sur la base du transistor T2 par l'intermédiaire d'une résistance R7 et l'entrée de l'horloge 9 est connectée à la base du transistor T3 par une résistance R8.

Le transistor T3 du bistable 10 constitue l'interrupteur 6 de la figure 1, le point A étant le collecteur du transistor T3. Ainsi, lors de l'émission d'un signal de dédenchement, ou sur demande lors de l'activation du bouton-poussoir B1, un signal positif est appliqué sur la base du transistor T3, le rendant conducteur et mettant le point A à la masse, permettant ainsi l'activation de la diode électroluminescente D1,D2 ou D3, correspondant au type de défaut mis en mémoire dans le circuit 5. Le signal S1 reste au niveau logique 0 jusqu'à la fin de la période t1, puis passe au niveau logique 1, entraînant la conduction du transistor T2 et le blocage du transistor T3. Ce basculement du bistable 10 provoque l'extinction de la diode de signalisation du type de défaut. Simultanément le signal S2 est au niveau logique 0 pendant une période t2, rendant conducteur le transistor T1, puis passe au niveau 1 après cette période, bloquant le transistor T1 et supprimant l'alimentation auxiliaire appliquée au bistable 10 et au circuit de mise en mémoire 5. Dans le mode de réalisation particulier représenté à la figure 2, l'horloge est de préférence alimentée en permanence par la pile.

Dans le mode de réalisation préférentiel représenté sur la figure 2, la base du transistor T3 est connectée par une résistance R9 à la sortie 5V du circuit d'alimentation 3. Tant que cette tension (5V) est présente, c'est à dire tant que le déclencheur est alimenté soit à propre courant, soit par une alimentation auxiliaire additionnelle (non représentée), connectée au circuit d'alimentation 3, le bistable est bloqué et le point A reste à la masse (T3 conduit) même lorsque le signal S1 passe au niveau logique 1. Il n'y a donc pas extinction de la diode de signalisation du type de défaut si la pile n'est pas utilisée en raison de la présence maintenue de la tension d'alimentation de 5V.

## Revendications

1. Déclencheur électronique comportant un circuit de traitement (4) produisant un signal de déclenchement (D) en cas de défaut sur une ligne électrique à protéger et des signaux (LR, CR, PT) représentatifs du type de défaut détecté, le déclencheur comportant des moyens (5, 6, 7, D1, D2, D3) de signalisation locale du type de défaut détecté, alimentés par des moyens d'alimentation auxiliaire (8) , notamment du type pile ou batterie, et auxquels sont appliqués les signaux représentatifs du type de défaut détecté, les moyens de signalisation locale comportant des moyens (5) de mise en mémoire du type de défaut connectés au circuit de traitement (4) et à des moyens d'affichage (D1, D2, D3), du type de défaut, déclencheur caractérisé en ce que les moyens de signalisation comportent des premiers moyens interrupteurs (6), connectés en série avec les moyens d'affichage (D1, D2, D3), et un circuit (7) de commande de signalisation produisant un signal de fermeture (S1) contrôlant la fermeture des premiers moyens interrupteurs (6) et l'affichage du type de défaut pendant une première période de durée prédéterminée (tl) après application sur une entrée du circuit (7) de commande de signalisation d'un signal de commande d'affichage, le signal de déclenchement (D) constituant un signal de commande d'affichage et les moyens de signalisation locale comportant des moyens (B1) de commande manuelle d'affichage -produisant un signal de commande d'affichage.

2. Déclencheur selon la revendication 1, caractérisé en ce que les moyens de commande manuelle d'affichage comportent un bouton-poussoir (T1) connecté entre les moyens d'alimentation auxiliaire (8) et le circuit (7) de commande de signalisation.

3. Déclencheur selon l'une des revendications 1 et 2, caractérisé en ce que les moyens de signalisation locale comportent des seconds moyens interrupteurs (T1) connectés entre les moyens d'alimentation auxiliaire (8) et les bornes d'alimentation des moyens de signalisation, le circuit (7) de commande de signalisation produisant un signal (S2) de fermeture des seconds moyens interrupteurs pendant une seconde période prédéterminée (t2), supérieure à la première (t1), après réception par le circuit (7) de commande de signalisation d'un signal de déclenchement (D)

4. Déclencheur selon la revendication 3, caractérisé en ce que la seconde période prédéterminée est de l'ordre de 24h.

5. Déclencheur selon l'une quelconque des revendications 1 à 4, caractérisé en ce que la première période de durée prédéterminée (t1) est de l'ordre de 1'30.

6. Déclencheur selon l'une quelconque des revendications 1 à 5, caractérisé en ce que le circuit (7) de commande de signalisation comporte une horloge (9), recevant sur une entrée le signal de commande d'affichage, un bistable (10) comportant deux entrées dont l'une est connectée à l'entrée de l'horloge et dont l'autre est connectée à une sortie de l'horloge produisant le signal (S1) de fermeture contrôlant la fermeture des premiers moyens interrupteurs (6), un transistor (T3) de sortie du bistable constituant les premiers moyens interrupteurs (6).

## Patentansprüche

1. Elektronischer Auslöser mit einer Signalverarbeitungsschaltung (4), die bei Auftreten eines Fehlers in der zu schützenden elektrischen Leitung ein Auslösesignal (D) sowie den Fehlertyp abbildende Signale (LR, CR, PT) erzeugt, sowie mit Mitteln (5, 6, 7, D1, D2, D3) zur lokalen Signalisierung des Fehlertyps, die über eine Hilfsenergiequelle (8), insbesondere eine ein- oder mehrzellige Batterie versorgt und mit den den erfaßten Fehlertyp abbildenden Signalen beaufschlagt werden sowie Mittel (5) zur Speicherung des Fehlertyps umfassen, die an die Signalverarbeitungsschaltung (4) sowie an Mittel (D1, D2, D3) zur Anzeige des Fehlertyps angeschlossen sind, dadurch gekennzeichnet, daß die Signalisierungsmittel erste, mit den Anzeigemitteln (D1, D2, D3) in Reihe geschaltete Schalteinrichtungen (6) sowie eine Signalisierungs-Treiberschaltung (7) umfassen, welche ein Einschaltsignal (S1) erzeugt, das zur Ansteuerung des Einschaltvorgangs der ersten Schalteinrichtungen (6) sowie der Anzeige des Fehlertyps während einer ersten festgelegten Laufzeit (t1) nach Beaufschlagung eines Eingangs der Signalisierungs-Treiberschaltung (7) mit einem Anzeigesteuersignal dient, wobei das Auslösesignal (D) als Anzeigesteuersignal verwendet wird und die lokalen Signalisierungsmittel handbetätigte Anzeigesteuermittel (B1) umfassen, die ein Anzeigesteuersignal erzeugen.

2. Auslöser nach Anspruch 1, dadurch gekennzeichnet, daß die handbetätigten Anzeigesteuermittel einen Drucktaster (B1) umfassen, der zwischen die Hilfsenergiequelle (8) und die Signalisierungs-Treiberschaltung (7) geschaltet ist.

3. Auslöser nach einem der Ansprüche 1 und 2, dadurch gekennzeichnet, daß die lokalen Signalisierungsmittel zweite Schalteinrichtungen (T1) umfassen, die zwischen die Hilfsenergiequelle (8) und die Einspeiseklemmen der Signalisierungsmittel geschaltet sind, wobei die Signalisierungs-Treiberschaltung (7) ein Signal (S2) erzeugt, das zum Einschalten der zweiten Schalteinrichtungen während einer über der ersten Laufzeit (t1) liegenden festgelegten zweiten Laufzeit (t2) nach Beaufschlagung der Signalisierungs-Treiberschaltung (7) mit einem Auslösesignal (D) dient.

4. Auslöser nach Anspruch 3, dadurch gekennzeichnet, daß die zweite festgelegte Laufzeit etwa 24 Std. beträgt.

5. Auslöser nach irgendeinem der Ansprüche 1 bis 4, dadurch gekennzeichnet, daß die erste festgelegte Laufzeit (t1) etwa 1 min und 30 s beträgt.

6. Auslöser nach irgendeinem der Ansprüche 1 bis 5, dadurch gekennzeichnet, daß die Signalisierungs-Treiberschaltung (7) ein Zeitglied (9), das an einem Eingang mit dem Anzeigesteuersignal beaufschlagt wird, sowie eine bistabile Kippstufe (10) mit zwei Eingängen umfaßt, von denen einer an den Eingang des Zeitglieds und der andere an einen Ausgang des Zeitglieds angeschlossen ist, der das Einschaltsignal (51) zur Ansteuerung des Einschaltvorgangs der ersten Schalteinrichtungen (6) liefert, wobei ein Ausgangstransistor (T3) der bistabilen Kippstufe die ersten Schalteinrichtungen (6) darstellt.

## Claims

1. An electronic trip device comprising a processing circuit (4) producing a tripping signal (D) in the event of a fault on an electrical line to be protected and signals (LR, CR, PT) representative of the type of fault detected, the trip device comprising means (5, 6, 7, D1, D2, D3) for local indication of the type of fault detected, supplied with power by auxiliary power supply means (8), notably of the battery or cell type, and to which the signals representative of the type of fault detected are applied, the means for local indication comprising means (5) for storing the type of fault connected to the processing circuit (4) and to means (D1, D2, D3) for displaying the type of fault, a trip device characterized in that the indication means comprise first switching means (6), connected in series with the display means (D1, D2, D3), and an indication control circuit (7) producing a closing signal (S1) controlling closing of the first switching means (6) and display of the type of fault during a first period of preset duration (t1) after a display control signal has been applied to the input of the indication control circuit (7), the tripping signal (D) constituting a display control signal and the local indication means comprising manual display control means (B1) producing a display control signal.

2. The trip device according to claim 1, characterized in that the manual display control means comprise a push-button (B1) connected between the auxiliary power supply means (8) and the indication control circuit (7).

3. The trip device according to one of the claims 1 and 2, characterized in that the local indication means comprise second switching means (T1) connected between the auxiliary power supply means (8) and the power supply terminals of the indication means, the indication control circuit (7) producing a closing signal (S2) of the second switching means during a second preset period (t2), greater than the first period (t1), after a tripping signal (D) has been received by the indication control circuit (7).

4. The trip device according to claim 3, characterized in that the second preset period is about 24h.

5. The trip device according to any one of the claims 1 to 4, characterized in that the first period of preset duration (t1) is about 1'30.

6. The trip device according to any one of the claims 1 to 5, characterized in that the indication control circuit (7) comprises a clock (9) receiving the display control signal on an input, a bistable (10) comprising two inputs one of which is connected to the input of the clock and the other of which is connected to an output of the clock producing the closing signal (S1) controlling closing of the first switching means (6), an output transistor (T3) of the bistable constituting the first switching means (6).
